Europäisches Patentamt

European Patent Office

Office européen des brevets

(11) Publication number: **0 003 370**
**B1**

# EUROPEAN PATENT SPECIFICATION

(45) Date of publication of patent specification: **24.03.82**

(51) Int. Cl.³: **B 23 K 35/40, B 21 C 37/04**

(21) Application number: **79200006.9**

(22) Date of filing: **05.01.79**

(54) Method for the continuous manufacture of a powder-filled welded tube.

(30) Priority: **19.01.78 NL 7800646**

(43) Date of publication of application:
**08.08.79 Bulletin 79/16**

(45) Publication of the grant of the patent:
**24.03.82 Bulletin 82/12**

(84) Designated Contracting States:
**BE CH DE FR GB IT LU SE**

(56) References cited:
**DE - C - 519 435**
**FR - A - 2 271 898**
**FR - A - 2 323 489**
**GB - A - 1 177 993**
**US - A - 1 588 761**
**US - A - 2 442 087**

(73) Proprietor: **Estel Buizen B.V.**
**Wilhelminakanaal Zuid 150**
**Oosterhout (NL)**

(72) Inventor: **de Zeeuw, Johan**
**Papenpad 12**
**Wageningen (NL)**
Inventor: **Vermeulen, Jacobus Cornelis**
**Moersbergenlaan 18**
**Arnhem (NL)**
Inventor: **Barendregt, Jan**
**Hertogenlaan 68**
**Oosterhout (NL)**

(74) Representative: **van Buytene, Arie Jacobus**
**p/a Estel Hoogovens B.V. P.O.Box 10.000**
**NL-1970 CA IJmuiden (NL)**

Courier Press, Leamington Spa, England.

Method for the continuous manufacture of powder-filled welded tube

The invention relates to a method for the continuous manufacture of powder-filled welded tube, including the steps of forming a metal strip into an open channel, introducing filling powder into the channel, closing the channel edges together to form a continuous tube with a closed longitudinal joint, welding said closed longitudinal joint to form a sealed tube, and reducing the size of the sealed tube.

Filled tube, and filled wire which can be formed from such tube, serve several purposes, for instance in welding processes as filler material or buildup material in joint-welding or build-up welding respectively. This applies in semi and fully automatic welding processes, wherein the metal of the tube or wire itself together with any metals in the filling provides the metal deposit, and slag-forming compounds in the filling have a protective and/or refining function. The filled tube or wire can in its final cross section be for example circular, oval or rectangular with rounded off corners. Typical dimensions are known in the welding art.

A great number of publications, including many in the patent literature, have been issued about the use, manufacture and outward appearance of filled wire and the compositions of its filling. See the article "Fülldrähte im Spiegel der Patentliteratur" by Dipl. Ing. Werner Höhn, ZIS-Mitteilungen, Heft 3 (1959), pages 915 through 924.

The conventional method of manufacturing filled tube is a continuous process in which metal strip is continuously formed into a U-shaped channel, the filling material is inserted into the channel, and the channel is closed into a tube. In some cases the edges of the channel have been deformed to lock them together. It is also known to weld the channel edges together continuously, to form a sealed tube.

When welding the channel edges, there is the danger that the heat generated by the welding will deleteriously affect the filling material, altering its composition or otherwise rendering it unsuitable for its purpose. Another problem, at least where the filler is a powder and electric welding is used, is that the powder tends to be whirled about by the magnetic fields present and to settle on the contact surfaces of the channel edges, possibly causing the weld to be weak.

The prior art proposals have not solved these problems satisfactorily and economically.

U.K. patent specification 1,485,571 (Netherlands application 75.05156; French specification 2,271,898) describes a process in which, after the channel has been filled with loose powder, a covering ribbon or foil, e.g. a band of soft steel of a thickness of 0.3 mm, is placed on the powder. The ribbon has a groove in it. The channel is then drawn through a die which closes its edges together and causes compaction of the powder beneath the covering foil. This occurs before welding. The purpose of the ribbon is to prevent the powder from adhering to the edges of the channel when the channel is closed together. This product is unsatisfactory firstly because of the additional expense of providing the ribbon, secondly because the ribbon being of conductive metal, does not satisfactorily protect the filling powder from the heat generated when the tube is welded, and thirdly because in use of the tube in electric arc welding, the folded tape will cause asymmetric current density and consequently a different melting characteristic from that of a cylindrical welding wire. In other words, as a result of the asymmetric current density the arc will not be stable but will swing, leading to unsatisfactory welding.

At page 1, lines 67 to 70, U.K. specification 1,485,571 refers to another earlier proposal for solution of the problem of powder sticking to the edges of the channel during closure, leading to poor weld quality. This proposal is described as "reducing the amount of powder which is fed into the channel," but is stated to be disadvantageous because of the corresponding increase of the ratio of solid metal to powder in the wire obtained and because of difficulties in maintaining the homogeneity and uniform distribution of the powder during the fabrication and drawing of the wire. It is said that the uses of such a wire are evidently very limited.

Closer investigation of this possibility has however now shown that, if certain measures are adopted, the process can in fact produce satisfactory results. From this starting point, therefore, the object of the present invention is therefore to provide a process for making powder-filled welded tube, in which the disadvantages of the prior art are avoided, which is simple and economic and in which in particular the powder filling is not deleteriously affected by the welding of the tube, while the tube has a uniform cross-section.

The invention as claimed provides a solution to this problem. In essence, as previously proposed, the powder filling occupies only a part of the tube when the welding occurs, so that the heat caused by welding does not reach the powder excessively. During welding, the powder is still loose, and only after welding does it come to fill the tube entirely, as a result of the subsequent size reduction which drives out the remaining air and packs the powder firmly in order to prevent longitudinal movement of the powder. There is no extra element, e.g. a ribbon or foil, so that the product has a uniform cross-section.

As described in the claims, the invention also proposes that the welding is performed in a particular manner.

Conventional tube-welding methods have the drawback that during welding of the strip edges there is a considerable risk of the occurrence of welding spatters as a result of sparks jumping. These spatters have a harmful effect on the composition of the filler materials, one of the purposes of which is slag formation during later use. The invention provides that this disadvantage of welding spatters and additionally the disadvantage of powder adhering to the channel edges are minimized by pressing together the strip edges, e.g. by means of butt rollers, substantially before the welding, and are kept under such pressure during welding so that the strip edges remain in contact. In this way it is prevented that by resilience of the material the butt weld formed is subjected to inadmissible tensile loads. A second advantage of preliminary closure of the strip edges is that fine particles from the filter powder are prevented from being whirled about by the magnetic fields present during electrical welding, and from settling on the contact surfaces of the strip edges and thus possibly causing a weak weld. Besides, at least in terms of metallurgy, the largest possible metallic contact occurs if the strip edges are pressed together.

Preferably, in the practice of this invention in the size reduction step the tube size is reduced to such an extent that the filling powder is compressed into a compact mass, i.e. the size reduction is more than is necessary to achieve firm packing of the powder in the tube.

The size reduction to pack the powder core firmly serves to prevent the powder from being dislodged longitudinally of the tube. The optional further reduction causes additional compression of the powder in the tube so as to form a compact mass.

To achieve satisfactory results, preferably at the time of welding, the powder occupies 70% or even less, of the internal cross-sectional area of the tube.

The product of the above-described method may be a coiled welded powder-filled tube or may be lengths of the tube, the ends of each length being closed.

An embodiment of the invention will be described below by way of non-limitative example with reference to the accompanying drawings, in which:—

Fig. 1 is a block sequence diagram of the various steps of a typical process embodying the invention; and

Figs. 2a and 2b show details of the filling and welding steps in one process embodying the invention.

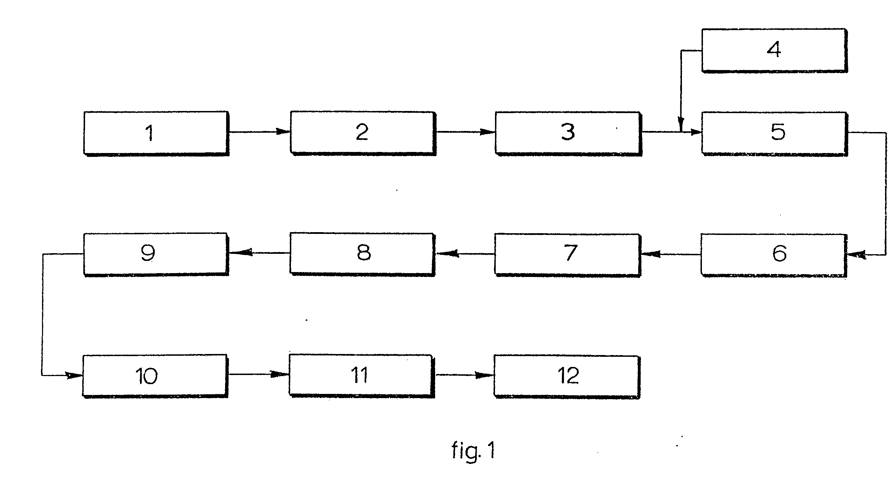

Referring to Fig. 1, a flat strip of steel is uncoiled from a coil in an uncoiling station 1. In a strip welding station 2, the beginning of each new coil is welded to the end of the strip of the previous coil so that with the use of a strip accumulator, an endless strip feed is produced. After this welding, the strip passes through a cleaning device for removal of any kind of dirt such as water, grease, moisture etc. from it.

Cleaning the strip is easier to perform than mechanically cleaning and degreasing the inside of a finished jointless tube.

In a forming station 3, the strip is deformed into an open channel by successive sets of rolls. At a filling station 4, by means of feed equipment of sufficient accuracy, for instance an electronically controlled weighing system combined with a vibrating trough and a worm conveyor, a powder filler material (either a fine powder or a powdery particulate material) is fed into the channel, to fill the channel up to a predetermined level. This powder is to serve as flux or as a slag formation and/or alloying agent in electrical arc-welding. The combination of vibration with a worm-conveyor provides a constant flow-rate of the material, and thus accurate dosing. Other suitable feeding methods may alternatively be employed.

In the welding station 5, the edges of the channel are pressed together to form a continuous tube with a longitudinal joint, which is welded along this joint so that a sealed welded tube is produced. Before and during welding it is important that the channel is pressed into a continuous tube with a longitudinal joint, by pressing the strip edges against one another. In this way the occurrence of welding spatters during welding is prevented. Nor can magnetizable particles from the powder, which may whirl up due to the magnetic fields produced when welding electrically, be deposited on the contact surfaces of the strip edges, so that the welding area should remain clean and a proper weld be produced. The metallic contact area between the strip edges pressed together is as large as possible.

The level in the channel to which the powder is filled by the filling station 4 is carefully chosen and controlled so that, when the tube is at the welding station 5, it is not fully filled, i.e. the powder occupies only a part of the internal cross-section of the tube. For instance, if the internal diameter of the tube is $d$, the depth of the layer of powder at the welding station is suitably about 0.75 d or slightly less, e.g. the powder occupies about 70% of the internal cross-sectional area of the tube. This results in the advantages explained above.

Before welding, it may be preferable to carry out a calibration (sizing) so that the strip edges are positioned in relation to each other very accurately. This calibration can be achieved by a slight reduction of the diameter. A further possibility is to clean the strip edges immediately before the tube is closed.

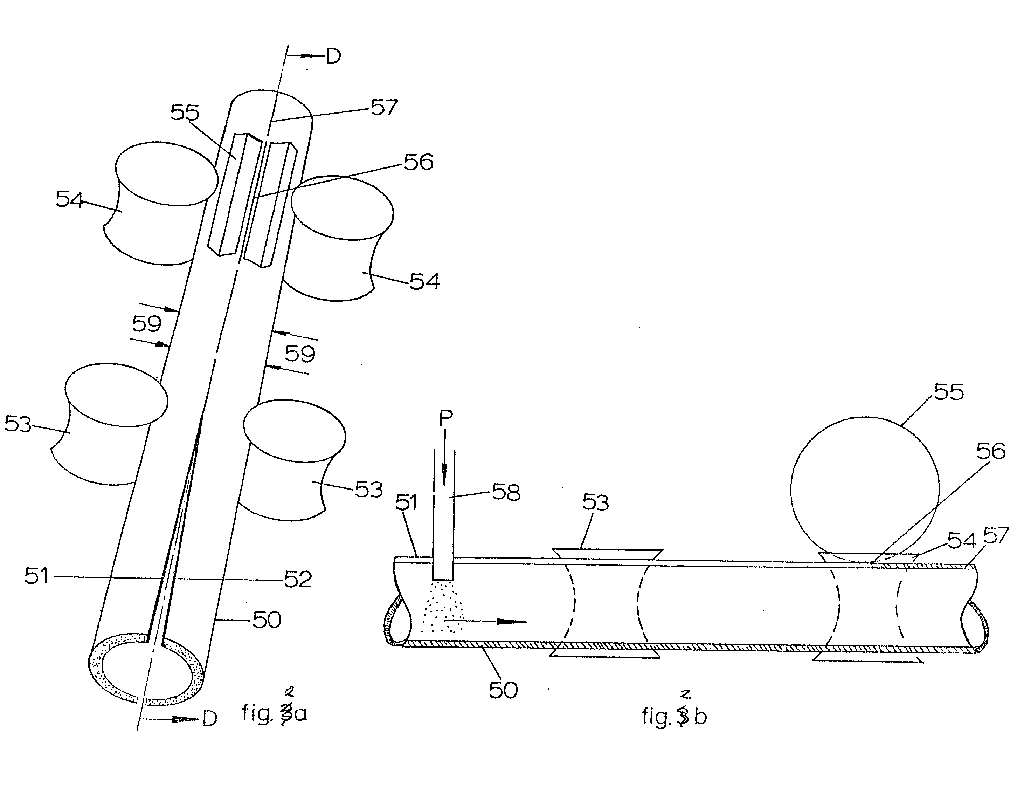

Before continuing the description of the process of Fig. 1, one possible method for welding and filling will now be discussed with reference to Figs. 2a and 2b.

Fig. 2a shows in perspective a tube 50 being welded by resistance welding. Fig. 2b which is a cross section on the line D—D in Fig. 2a, shows the method of filling. The edges 51 and 52 of the tube 50 are pressed together by a first set of press rollers 53, 53 which engage the tube from opposite sides in advance of the welding point 56. A second set of press rollers 54, 54 engages the tube at a point longitudinally spaced from the first set 53 by a short distance and serves to press the edges of the tube together at the welding point 56. A pair of rotating roller electrodes 55 connected to an electrical energy source is situated between the sets of press rollers 53 and 54 (being close to the rollers 54) and effects resistance heating to cause welding at the welding point 56 to form a welded joint 57.

Fig. 2b which is a cross section on the line D—D of Fig. 2a shows how the powder 58a is introduced through a vertical filling pipe 58, which is inserted between the strip edges 51 and 52 into the tube 50. This filling is at a rate such that the powder only partially fills the tube at the welding point.

With two sets of press rollers 53, 54 at which the joint is pressed together, the risk of magnetizable particles from the powder landing between the strip edges is negligible. It is important that the powder only partially fills the tube during the welding step, leaving an air gap above between itself and the point of welding. The amount of heating is not sufficient to cause excessive heating of the powder.

In the embodiment of Figs. 2a and 2b, the tube is closed together so that the longitudinal gap is reduced to zero before the welding point. The tube is kept under pressure for a short period after welding, so that retraction is avoided. This has the beneficial result that in the still hot welding zone tensions and deformations transverse to the longitudinal direction of the tube are not introduced.

Returning to Fig. 1, a calibrating or sizing station 6 follows after the welding station 5. Before the sealed tube is subjected to calibration, external welding bead formed in the welding can be removed by planing. Immediately after planing the tube can be cooled. Calibration is done using calibrating rollers, and causes such a reduction in the diameter of the tube that the air above the powder is driven out and powder core is firmly enclosed in the tube. This prevents the powder moving along the tube.

In the station 7 a draw treatment of the tube follows with the aid of drawing blocks, which causes a further reduction in diameter and at the same time compresses the powder in the tube to a more compact mass. In the next station 8 the tube is degreased.

The material obtained may be a precursor material which still has to undergo further reductions down to the dimensions required by the customer. Products which can be manufactured from the partially completed material include filled welding wire, filled welding strip and sealed heating elements.

Because the metal hardens as a result of the cold-deformation during reduction, it may be thought necessary to anneal the product in an annealing furnace 9, and this must be done without causing undesirable changes in the powder. However, for some purposes the work-hardening caused by the size reduction is advantageous. The product is next copper-plated in the station 10, if a better outward appearance is required.

In the station 11, drawing blocks or a roll reduction machine are provided to reduce the product even further and to give it the dimensions and shape required for its final use.

In a finishing station 12, the finished product is either coiled on a coiler into a bundle suitable for despatch, or is cut to the required lengths with the cut ends being made so that the filling cannot drop out.

The illustrated method of the invention is fully reproducible and provides a uniform product, in which the complete sealing safeguards the powder from being affected by air, moisture, grease etc. This method also places no restrictions on the composition of the powder or the type of powder, in contrast with many other methods where the powder must be pre-treated in some or other way, for instance by sintering and grinding.

## Claims

1. A method for the continuous manufacture of powder-filled welded tube (50) including the steps of forming a metal strip into an open channel, introducing filling powder (58a) into the channel, closing the channel edges together to form a continuous tube with a closed longitudinal joint, electrically welding said closed longitudinal joint to form a sealed tube, and reducing the size of the sealed tube, wherein the amount of powder introduced into the channel is such that the tube is not fully filled when the longitudinal joint (57) is welded, and the subsequent size reduction causes the powder filling to become firmly packed in the tube interior, characterized in that, at the time of welding, the powder occupies not more than 85% of the internal cross-sectional area of the tube, and that the edges of the channel are closed together before the welding step and are kept pressed in contact one against the other during welding by two pairs of opposed rollers (53, 54), the two rollers of each said pair respectively engaging the channel from opposite sides, a first one (53) of said pairs engaging the channel to close the edges together in advance of the welding point (56) and the second pair (54) engaging the channel after the said first pair (53) to hold the edges together at the welding point (56), the welding being carried out by resistance heating effected by means of roller electrodes (55) engaging the tube at opposite sides of the said pressed-together edges.

2. A method according to claim 1 wherein at the time of welding, the powder occupies about 70% of the internal cross-sectional area of the tube.

3. A method according to claim 1 or claim 2 wherein the delivery of the filling powder into the channel is performed by means of a vibrating conveyor and/or a worm conveyor.

## Revendications

1. Procédé pour fabriquer en continu des tubes soudés (50) remplis de poudre, comprenant les stades de conformation en U d'un feuillard, introduction de la poudre de remplissage (58a) dans l'U, conformation en 0 par rapprochement des bords de l'U pour former un tube continu présentant un joint fermé longitudinal, soudage électrique de ce joint fermé longitudinal pour former un tube étanche et réduction des dimensions de ce tube étanche, la quantité de poudre introduite dans l'U étant telle que le tube n'est pas complètement rempli lorsque le joint longitudinal (57) est soudé et la réduction ultérieure des dimensions ayant pour conséquence d'enfermer la poudre de remplissage à l'intérieur du tube, ce procédé étant caractérisé en ce que, au moment du soudage, la poudre n'occupe pas plus de 85% de la section transversale intérieure du tube; et en ce que les bords de l'U sont refermés l'un contre l'autre avant le soudage et sont maintenus pressés l'un contre l'autre pendant le soudage par deux paires de galets opposés (53) et (54), les deux galets de chaque paire étant respectivement en contact avec l'U sur chacun de ses côtés opposés, la première paire (53) de galets entrant en contact avec l'U pour refermer ses bords l'un contre l'autre avant le point (56) de soudage, et la deuxième paire (54) de galets entrant en contact avec l'U après la première paire (53) afin de maintenir les bords pressés l'un contre l'autre au point (56) de soudage, ce soudage étant exécuté par chauffage par effet Joule réalisé par l'intermédiaire de molettes (55) en contact avec le tube sur les côtés opposés des bords pressés l'un contre l'autre.

2. Procédé suivant le revendication 1, caractérisé en ce que, au moment du soudage, la poudre occupe environ 70% de la section transversale intérieure du tube.

3. Procédé suivant l'une des revendications 1 ou 2, caractérisé en ce que l'introduction de la poudre de remplissage dans l'U s'effectue au moyen d'un transporteur vibrant et (ou) d'un transporteur à vis sans fin.

## Patentansprüche

1. Verfahren zur kontinuierlichen Herstellung von pulvergefülltem Schweißrohr (50), bei dem ein Metallband zu einem offenen U-Profil geformt wird, in das Profil eine Pulverfüllung (58a) eingebracht wird, die Profilkanten zur Bildung eines fortlaufenden Rohrs mit geschlossener Längsnaht gegeneinander geschlossen werden, die geschlossene Längsnaht zur Bildung eines geschlossenen bzw. verschweißten Rohrs elektrisch geschweißt wird und das verschweißte Rohr in seinen Abmessungen reduziert wird, wobei die Menge des in das Profil eingefüllten Pulvers so gewählt wird, daß das Rohr beim Schweißen der Längsnaht (57) nicht vollständig gefüllt ist und bei der anschließenden Reduzierung der Abmessungen die Pulverfüllung im Inneren des Rohrs fest gepacht bzw. verdichtet wird, dadurch gekennzeichnet, daß das Pulver beim Schweißvorgang nicht mehr als 85% der Innenquerschniittsfläche des Rohrs einnimmt und daß die Kanten des Profils vor dem Schweißvorgang gegeneinander geschlossen und während des Schweißvorgangs durch zwei Paare einander gegenüberstehender Walzen (53, 54) in Berührung miteinander gehalten werden, wobei die beiden Walzen jedes Paars jeweils von gegenüberliegenden Seiten her am Profil angreifen, ein erstes Walzenpaar (53) das Profil erfaßt und die Profilkanten vor der Schweißstelle (56) schließt und das zweite Walzenpaar (54) hinter dem ersten Walzenpaar (53) am Profil angreift, um die Profilkanten an der Schweißstelle (56) gegeneinander zu halten, wobei das Schweißen durch Widerstandserwärmung mittels Rollenelektroden (55) erfolgt, die auf gegenüberliegenden Seiten der zusammengepreßten Profilkanten am Rohr angreifen.

2. Verfahren nach Anspruch 1, dadurch gekennzeichnet, daß das Pulver beim Schweißvorgang etwa 70% der Innenquerschnittsfläche des Rohre einnimmt.

3. Verfahren nach Anspruch 1 oder 2, dadurch gekennzeichnet, daß das Einfüllen der Pulverfüllung in das Profil mittels eines Rüttelförderers und/oder eines Schneckenförderers erfolgt.

fig. 1

fig. 3b

fig. 3a